# EUROPEAN PATENT APPLICATION

(11) **EP 4 799 891 A1**
(43) Date of publication of application: **02.09.2026**
(21) Application number: 26160769.1
(22) Date of filing: 25.02.2026
(51) Int. Cl.: B60W 50/00, B60W 10/20, B60W 30/14, B60W 10/18

(54) **CONTROL SYSTEM FOR CONTROLLING A VEHICLE SYSTEM**

(30) Priority: 28.02.2025 GB 202502928
(71) Applicant: Jaguar Land Rover Limited, Coventry, Warwickshire CV3 4LF (GB)
(72) Inventor: Palai, Dibyendu, Coventry, CV3 4LF (GB); Basavapatna Nanjundaiah, Krishnamurthy, Coventry, CV3 4LF (GB); Munusamy, Suruthi Mahalakshmi, Coventry, CV3 4LF (GB); Turan, Bugra, Coventry, CV3 4LF (GB)
(74) Representative: Jaguar Land Rover Patents Department

(57) **Abstract**

Aspects of the present invention relate to A control system (10) for controlling a vehicle system (20), the vehicle system configured to provide one or more function of a vehicle (100, 200), the one or more function of the vehicle (100, 200) comprising a set of one or more activatable vehicle function, the control system (10) comprising one or more processors collectively configured to:
- identify (310) an occupant (400, 410) of the vehicle (100, 200),
- determine (320), in dependence on a user profile associated with the identified occupant (400, 410), a subset of the set of one or more activatable vehicle function activatable by the identified occupant (400, 410), and
enable (330) the subset of the set of one or more activatable vehicle function activatable by the identified occupant (400, 410) in the vehicle system (20).

## Description

### TECHNICAL FIELD

The present disclosure relates to a control system for controlling a vehicle system. Aspects of the invention relate to a control system, to a vehicle, and to a method.

### BACKGROUND

In the prior art, vehicle functions are configured and activated by occupants of vehicles only during an initial setup phase. For example, a vehicle function may influence the way the vehicle operates. For example, an adaptive cruise control, a parking assistant or a dead-angle warning or any other suitable operations which affect how a vehicle operates would be vehicle functions.

This approach limits customers from experiencing updated function enhancements tailored to their preferences or usage patterns throughout the vehicle's lifecycle. Additionally, occupants of vehicles cannot transfer activated functions from one vehicle to another. For original equipment manufacturers, this results in a reduced capability to optimize function utilization over the vehicle's lifecycle.

It is an aim of the present invention to address one or more of the disadvantages associated with the prior art.

### SUMMARY OF THE INVENTION

Aspects and embodiments of the invention provide a control system, to a vehicle, and to a method as claimed in the appended claims

According to an aspect of the present invention there is provided a control system for controlling a vehicle system, where the vehicle system is configured to provide one or more functions of a vehicle. These functions comprise a set of one or more activatable vehicle functions. The control system includes one or more processors collectively configured to identify an occupant of the vehicle, determine a subset of the activatable vehicle functions based on a user profile associated with the identified occupant, a subset of the set of one or more activatable vehicle function activatable by the identified, and enable the subset of activatable vehicle functions in the vehicle system.

A control system according to the invention allows, depending on the user profile, that the occupant can activate vehicle functions in any car with the control system. Furthermore, the vehicle functions can be activated in a specific vehicle depending on the occupant. In other words, the control system according to the invention ensures that the activatable vehicle functions match the functions which are associated occupant of the vehicle. Thus if the occupant changes the features which are activated on a vehicle may change. Similarly if an occupant changes vehicle, for example if the occupant uses a hire car, then the vehicle functions associated with the occupant follow the occupant and are activated in the different vehicle.

The control system may comprise one or more controllers collectively comprising at least one electronic processor having an electrical input for receiving an input signal; and at least one memory device electrically coupled to the at least one electronic processor and having instructions stored therein; and wherein the at least one electronic processor is configured to access the at least one memory device and execute the instructions thereon.

A vehicle system may be the integrated components and/or subsystems within a vehicle that work together to perform a vehicle function. A vehicle system may for example be an engine management system, a braking system, or an infotainment system.

Vehicle functions may be understood as an operation and/or a feature that a vehicle can perform or provide. Vehicle functions may include climate control, navigation, or adaptive cruise control. In particular, it may be provided that the vehicle function is specific to a vehicle. In other words, the vehicle function may be a function that is performed by a vehicle and not another device, e.g. a hill start assistant, ADAS etc. An example of a function that can be performed by another device is the control of an infotainment function, which may for example be provided by smartphone.

Identifying an occupant may involve determining the identity of a person, in particular inside the vehicle and/or in the proximity of the vehicle.

Identifying may comprise facial recognition, fingerprint scanning, or voice recognition. Facial recognition may be implemented using at least one camera installed in the vehicle, in particular arranged on a dashboard or rearview mirror, to capture at least one image of the occupant's face. An advantage of facial recognition is that it can operate passively, without requiring any action from the occupant, providing a seamless user experience.

Fingerprint scanning may be implemented using a fingerprint sensor, in particular embedded in a vehicle's button, in particular a start button or a door handle. An advantage of fingerprint scanning is its high accuracy and security, as fingerprints are unique to each individual.

Alternatively or in addition, voice recognition may be implemented, using a microphone, in particular arranged within the vehicle to capture the occupant's voice. An advantage of voice recognition is that it can be used for hands-free operation, enhancing safety by allowing the driver to keep their hands on the wheel and eyes on the road.

It is further conceivable that the identifying an occupant comprises providing a user interface, wherein the user can input user credentials, in particular a username and/or a password.

A user profile may refer to a collection of data that represents at least one of an identity of an occupant, a subset of the set of one or more activatable vehicle function activatable by the identified occupant, and vehicle preferences. Further to information on a subset of the set of one or more activatable vehicle function activatable by the identified occupant, a user profile may include preferences, settings, and personal information. The user profile allows to connect the occupant with the set one or more activatable vehicle function activatable by the identified occupant, so that the subset of vehicle functions can be enabled.

Determining in dependence on a user profile may be understood as querying a database comprising user profiles with subsets of the set of one or more activatable vehicle functions. This allows to find the correct subset of activatable functions for the identified occupant.

Activatable vehicle functions may be a single or a set of vehicle functions that can be turned enabled based on a conditions and/or inputs. The condition may include, for example, that the function has been previously selected and/or acquired by the occupant. An enabled function may not be immediately active. For example, a parking assistant may be enabled, but only activated when the vehicle is to be parked.

Enabling and/or activating vehicle functions may involve activating and/or allowing certain features or operations to be used. This can be done in particular through software commands, user inputs, or automated processes. However, only the subset of activatable vehicle functions in the vehicle system is being enabled, wherein the subset of the activatable vehicle functions based on a user profile associated with the identified occupant

It is conceivable that the control system comprising one or more processors is further collectively configured to disable a second subset of the set of one or more activatable vehicle function that are not part of the determined subset. As a result, the occupant can only activate functions that are enabled according to the corresponding user profile.

Optionally, the control system includes one or more processors collectively configured to identify the occupant, determine and enable the subset of features upon the vehicle being put into a drive mode. In other words, the control system may include processors that work together to recognize the occupant, decide, and activate the subset of features when the vehicle is set to drive mode. This has the advantage that the vehicle can be prepared before starting, eliminating the need to operate the control system in areas with poor reception.

A drive mode may refer to an operational setting of the vehicle in which the vehicle is able to move. The drive mode may be manually selected by the occupant or automatically activated, in particular based on a detected condition. Alternatively, or in addition, the one or more processors may be collectively configured to identify the occupant, determine and enable the subset of features upon the start of a power cycle of the vehicle. A power cycle may be defined as the time between an activation of a main source of power, in particular a combustion engine or a battery, and its deactivation.

Optionally, the one or more processors are further collectively configured to identify the occupant at least in a second vehicle and enable the subset of the set of one or more activatable vehicle functions activatable by the identified occupant in a vehicle system of the second vehicle. To put it another way, the processors can recognize the occupant in another vehicle and activate the same subset of functions in that vehicle. This way, the occupant of a vehicle can enable the subset of functions on a second or any further vehicle upon identification.

The second vehicle can be understood as a further vehicle that functions independently of the vehicle. The second vehicle can be the same or a different type. This allows for a seamless transition of vehicle functions across different vehicles.

Optionally, the one or more processors are further collectively configured to identify at least a second occupant of the vehicle, determine, in dependence on a user profile associated with the identified second occupant, a subset of the set of one or more activatable vehicle functions activatable by the identified second occupant, and enable the subset of the set of one or more activatable vehicle functions activatable by the identified second occupant in the vehicle system. In other words, the processors may recognize a second person in the vehicle and activate a different subset of functions for them. This ensures that multiple occupants can have personalized vehicle functions.

The occupants may be in the vehicle at the same time or at different times. If only the second occupant is in the vehicle, it may be provided that only the subset of the set of one or more activatable vehicle functions is enabled that is activatable by the identified second occupant. If the first occupant is present as well, it may be provided that the subset of the set of one or more activatable vehicle functions is enabled that is activatable either for the first and/or second occupant. In other words, it may be provided that the vehicle functions that are available to the occupants may be the union of the subsets of the occupants. This provides the advantage that the user experience of the occupants is improved, as more functionality is available to them, and there is no need to switch user profiles to enable a function that is only available for one of them.

Optionally, at least one of the set of one or more activatable vehicle functions controls at least one of: a velocity of the vehicle; and a direction of travel of the vehicle. To put it another way, the activatable functions may include controlling the speed and steering of the vehicle. This provides the advantage of integrating critical, in particular Advanced Driver Assistance Systems (ADAS), functions into the control system. Since in particular more advanced vehicle functions may undergo further development after the vehicle is deployed, managing, in particular providing these functions with the control system improves the user experience, as the occupants can enable the newest functions, which follow them from vehicle to vehicle.

Optionally, it is conceivable that the one or more processors are further collectively configured to, for at least one vehicle function within the subset of the set of one or more activatable vehicle functions activatable by the identified occupant, determine, in dependence on a vehicle profile associated with the vehicle, if said at least one vehicle function is activatable for the vehicle; and enable said at least one vehicle function if it is activatable for the vehicle. In other words, the processors can check if a specific function is available for the vehicle and enable it if it is. This ensures that only compatible functions are enabled.

A vehicle profile may be understood as a set of characteristics and/or settings associated with the vehicle.

Optionally, the vehicle profile comprises at least one of a vehicle type, a version of a computer program installed on the vehicle, a list of activatable vehicle functions, and an interdependency with another vehicle function. To put it another way, the vehicle profile may include details such as the model of the vehicle, software version, available functions, and how they interact with each other. A vehicle profile like this ensures that only functions are enabled that are compatible with the specific vehicle.

Optionally, the one or more processors are further collectively configured to output a signal indicative of the enabled subset of the set of one or more activatable vehicle functions activatable by the identified occupant. In other words, the processors can send a signal showing which functions have been activated for the occupant. This provides clear feedback on the status of the vehicle functions. The signal may be shown on a user interface, in particular a display and or a light on a control panel. It is also conceivable that a notification is sent to the occupant that the functions have been enabled.

Optionally, the control system further comprises at least one of the vehicle function system and an occupant identification means that is configured to identify the occupant of the vehicle. To put it another way, the control system may include the vehicle's function system and a way to recognize the occupant. This ensures that the system can identify who is in the vehicle and enable the appropriate functions.

Optionally, the control system may comprise a communication system that is configured to communicate with a vehicle function system and/or a sharable resource. The communication system may in particular be electrically connected to the vehicle function system. Furthermore, the communication system may be configured to communicate with the sharable resource wirelessly, in particular through Wi-Fi and/or mobile radio.

An occupant identification means may be understood as a system for recognizing the person inside the vehicle. Furthermore, it is conceivable that the vehicle function system comprises an advanced driver-assistance system. In other words, the vehicle function system may include features that assist the driver. This provides the advantage of enhancing driving safety and convenience.

Optionally, the advanced driver-assistance system is configured to perform at least one of: adaptive cruise control, lane assistance, blind spot detection, automatic emergency braking, and parking assistance. To put it another way, the driver-assistance system may include features such as maintaining speed, helping with lane changes, detecting vehicles in blind spots, automatically braking in emergencies, and assisting with parking. This ensures a comprehensive set of complex features. These complex features are often subject to further development after the vehicle is being deployed, so that a control system according to the invention provides the advantage that new advanced or updated vehicle functions can be provided for the occupant. It is also advantageous if the user can always access the same driver assistance systems when changing vehicles, as these increase driving comfort.

According to another aspect of the invention, a vehicle comprising a control system according to the invention is provided.

This gives the vehicle the same advantages as those already described in detail in connection with a control system according to the invention.

According to yet another aspect of the invention, a method for controlling a control system, in particular according to the invention, for controlling a vehicle system configured to provide one or more functions of a vehicle, comprising a set of one or more activatable vehicle functions, is provided. The method comprises identifying an occupant of the vehicle, determining, in dependence on a user profile associated with the identified occupant, a subset of the set of one or more activatable vehicle functions activatable by the identified occupant, and enabling the subset of the set of one or more activatable vehicle functions activatable by the identified occupant in the vehicle system.

This gives the method the same advantages as those already described in detail in connection with a control system and/or vehicle according to the invention.

According to a further aspect of the invention, computer readable instructions which, when executed by a computer, are arranged to perform the method according to the invention are provided.

This gives the computer readable instructions the same advantages as those already described in detail in connection with a control system, a vehicle, and/or method according to the invention.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a vehicle in accordance with an embodiment of the invention as well as a control system in accordance with an embodiment of the invention;
Figure 2 shows a method in accordance with an embodiment of the invention;
Figure 3 shows a further method in accordance with an embodiment of the invention;
Figure 4 shows a first and a second vehicle with control systems in accordance with an embodiment of the invention;
Figure 5 shows a data flow diagram in accordance with an embodiment of the invention; and
Figure 6 shows a control system in accordance with an embodiment of the invention.

### DETAILED DESCRIPTION

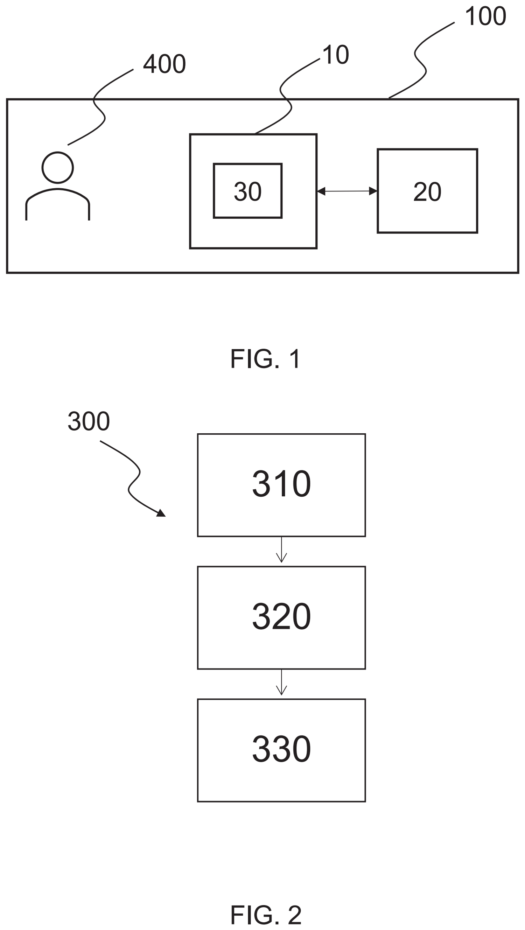

A vehicle 100 and a control system 10 in accordance with an embodiment of the present invention is described herein with reference to the accompanying Figure 1. As shown in Figure 1, the control system 10 is installed in the vehicle 100. As further shown in Figure 1, an occupant 400 is in the vehicle 100.

According to an embodiment of the present invention there is provided a control system 10 for controlling a vehicle system 20, where the vehicle system 20 is configured to provide one or more functions of a vehicle 100. These functions comprise a set of one or more activatable vehicle functions. The control system 10 includes one or more processors collectively configured to identify 310 an occupant 400 of the vehicle 100, determine 320 a subset of the activatable vehicle functions based on a user profile associated with the identified occupant 400, a subset of the set of one or more activatable vehicle functions activatable by the identified occupant 400, and enable 330 the subset of activatable vehicle functions in the vehicle system 20.

A control system 10 according to the invention and as shown in Fig. 1 allows, depending on the user profile, that the occupant 400 can activate enabled vehicle functions in any car with the control system 10. Furthermore, the vehicle functions can be activated in a specific vehicle 100 depending on the occupant 400. In other words, the control system 10 according to the invention ensures that the activatable vehicle functions match the functions associated with the occupant 400 of the vehicle 100. Thus, regardless of the vehicle the occupant is in, the vehicle will enable the activable functions (provided such functions are present on said vehicle).

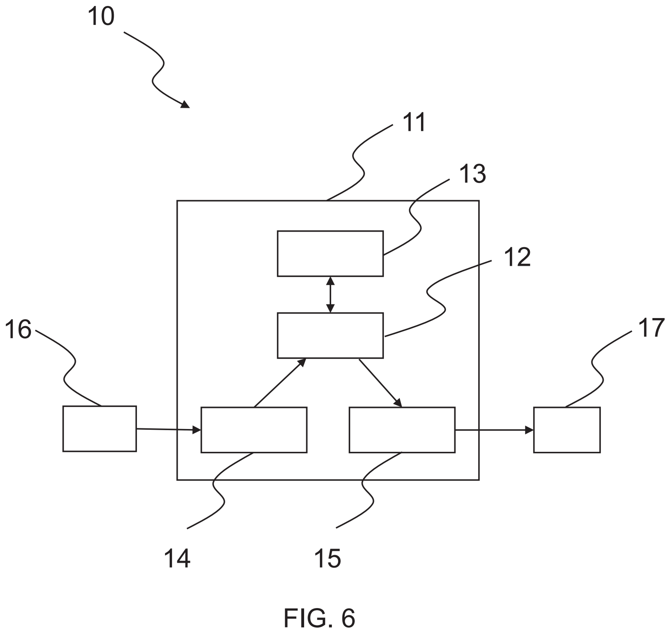

The control system 10 as shown in Figure 6 is configured to receive identification data 16 from an identification sensor 30 and identify 310 an occupant 400 of the vehicle 100. The control system 10 may then output a control signal 17 to enable 330 the subset of activatable vehicle functions in the vehicle system 20.

The control system 10 as illustrated in Figure 6 comprises one controller 11, although it will be appreciated that this is merely illustrative. The controller 11 comprises processing means 12 and memory means 13. The processing means 12 may be one or more electronic processing device 12 which operably executes computer-readable instructions. The memory means 13 may be one or more memory device 13. The memory means 13 is electrically coupled to the processing means 12. The memory means 13 is configured to store instructions, and the processing means 12 is configured to access the memory means 13 and execute the instructions stored thereon.

The controller 11 comprises an input means 14 and an output means 15. The input means 14 may comprise an electrical input 14 of the controller 11. The output means 15 may comprise an electrical output 15 of the controller 11. The input 14 is arranged to receive an identification signal 16 from an identification sensor 30. The identification signal 16 is an electrical signal which is indicative of an occupant 400. The output 17 is arranged to output an enable control signal 17 is indicative of the subset of activatable vehicle functions in the vehicle system 20 for controlling the vehicle system 20.

A vehicle system 20 may be the integrated components and/or subsystems within a vehicle 100 that work together to perform a vehicle function. A vehicle system 20 may for example be an engine management system, a braking system, or an infotainment system.

Vehicle functions may be understood as an operation and/or a feature that a vehicle 100 can perform or provide. Vehicle functions may include climate control, navigation, or adaptive cruise control. Identifying an occupant 400 may involve determining the identity of a person, in particular inside the vehicle 100 and/or in the proximity of the vehicle 200. In particular, it may be provided that the vehicle function is specific to a vehicle 100. In other words, the vehicle function may be a function that can only be performed by a vehicle 100 and not another device, e.g. a hill start assist. An example of a function that can be performed by another device is an infotainment function, which may e.g. be provided by smartphone.

Identifying 310 may comprise facial recognition, fingerprint scanning, or voice recognition. Facial recognition may be implemented using at least one camera installed in the vehicle 100, in particular arranged on a dashboard or rearview mirror, to capture at least one image of the occupant's 400 face. An advantage of facial recognition is that it can operate passively, without requiring any action from the occupant 400, providing a seamless user experience.

Fingerprint scanning may be implemented using a fingerprint sensor, in particular embedded in a vehicle's button, in particular a start button or a door handle. An advantage of fingerprint scanning is its high accuracy and security, as fingerprints are unique to each individual.

Alternatively or in addition, voice recognition may be implemented, using a microphone, in particular arranged within the vehicle 200 to capture the occupant's 400 voice. An advantage of voice recognition is that it can be used for hands-free operation, enhancing safety by allowing the driver to keep their hands on the wheel and eyes on the road.

It is further conceivable that the identifying an occupant 400 comprises providing a user interface, wherein the user can input user credentials, in particular a username and/or a password.

A user profile may refer to a collection of data that represents at least one of an identity of an occupant 400, a subset of the set of one or more activatable vehicle functions activatable by the identified occupant 400, and vehicle 200 preferences. Further to information on a subset of the set of one or more activatable vehicle functions activatable by the identified occupant 400, a user profile may include preferences, settings, and personal information. The user profile allows to connect the occupant 400 with the set one or more activatable vehicle functions activatable by the identified occupant 400, so that the subset of vehicle functions can be enabled.

Determining 320 in dependence on a user profile may be understood as querying a database comprising user profiles with subsets of the set of one or more activatable vehicle functions. This allows to find the correct subset of activatable functions for the identified occupant 400.

Activatable vehicle functions may be a single or a set of vehicle functions that can be turned enabled based on a conditions and/or inputs. The condition may include, for example, that the function has been previously selected and/or acquired by the occupant 400. An enabled function may not be immediately active. For example, a parking assistant may be enabled, but only activated when the vehicle 100 is to be parked.

Enabling 330 and/or activating vehicle functions may involve activating and/or allowing certain features or operations to be used. This can be done in particular through software commands, user inputs, or automated processes. However, only the subset of activatable vehicle functions in the vehicle system 20 is being enabled, wherein the subset of the activatable vehicle functions based on a user profile associated with the identified occupant 400. It may further be provided that a deactivated subset of vehicle functions based on a user profile associated with the identified occupant 400 is deactivated. It is conceivable that the control system 10 comprising one or more processors is further collectively configured to disable a second subset of the set of one or more activatable vehicle functions that are not part of the determined subset. As a result, the occupant 400 can only activate functions that are enabled according to the corresponding user profile.

For example, an occupant 400 with an advanced driving assistance system function linked to their profile can use this function in their vehicle because it is enabled and can be activated as needed. If the occupant 400 switches from one vehicle 100 to another vehicle 200, the advanced driving assistance system functionality is also available there.

Similarly, for a first vehicle 100, if a first occupant 400 is replaced by a different occupant (not shown) functionality which was activated for the first occupant (e.g., the advanced driving assistance system functionality) may be disabled for the second occupant if said functionality is not associated with the second user. Thus, the functionality activated for the first vehicle 100 may vary according to the occupant. Optionally, the determination of the occupant 400 and their associated functionality being enabled and/or disabled occurs for each power cycle of the vehicle.

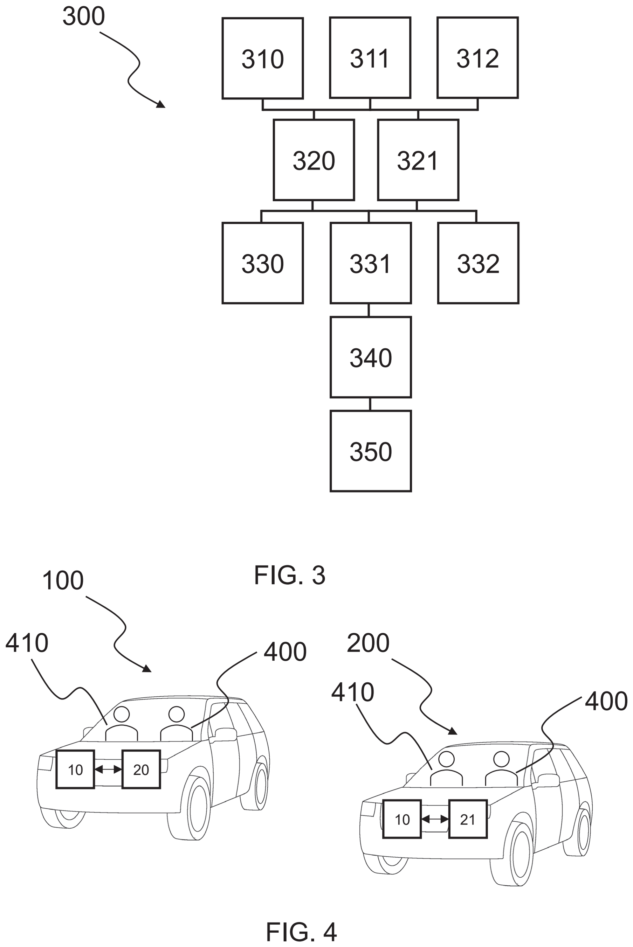

Figure 2 illustrates a method 300 according to an embodiment of the invention. The method 300 is a method of a control system 10 of a vehicle 400, such as the vehicle 400 illustrated in Figure 4. The method 300 may be performed by the control system 10 illustrated in Figure 6. In particular, the memory 13 may comprise computer-readable instructions which, when executed by the processor 12, perform the method 300 according to an embodiment of the invention.

As further shown in Figure 2, a method 300 for controlling a control system 10, in particular according to the invention, for controlling a vehicle system 20 configured to provide one or more functions of a vehicle 200, comprising a set of one or more activatable vehicle functions, is provided. The method 300 comprises identifying 310 an occupant 400 of the vehicle 200, determining 320, in dependence on a user profile associated with the identified occupant 400, a subset of the set of one or more activatable vehicle functions activatable by the identified occupant 400, and enabling 330 the subset of the set of one or more activatable vehicle functions activatable by the identified occupant 400 in the vehicle system 20.

This gives the method 300 the same advantages as those already described in detail in connection with a control system 10 and/or vehicle 200 according to the invention.

The variations involving a second occupant 410 and/or a second vehicle 200 which are described in connection with the control system 10 and are shown in Figure 3.

Optionally, the control system 10 includes one or more processors collectively configured to identify 310 the occupant 400, determine 320 and enable 330 the subset of features upon the vehicle 100 being put into a drive mode. In other words, the control system 10 may include processors that work together to recognize the occupant 400, decide, and activate the subset of features when the vehicle 100 is set to drive mode. This has the advantage that the vehicle 100 can be prepared before starting, eliminating the need to operate the control system 10 in areas with poor reception.

A drive mode may refer to an operational setting of the vehicle 100 in which the vehicle 100 is able to move. The drive mode may be manually selected by the occupant 400 or automatically activated, in particular based on a detected condition. Alternatively or in addition, the one or more processors may be collectively configured to identify the occupant 400, determine and enable the subset of features upon the start of a power cycle of the vehicle 100. A power cycle may be defined as the time between an activation of a main source of power, in particular a combustion engine or a battery, and its deactivation.

Turning now to Figures 3 and 4, it may be provided that the one or more processors are further collectively configured to identify 311 the occupant 400 at least in a second vehicle 200 and enable 331 the subset of the set of one or more activatable vehicle functions activatable by the identified occupant 400 in a vehicle system 20 of the second vehicle 200. To put it another way, the processors can recognize 311 the occupant 400 in another vehicle 200 and activate 331 the same subset of functions in that vehicle 200. This way, the occupant 400 of another vehicle 200 can enable the subset of functions on a second or any further vehicle 200 upon identification.

The second vehicle 200 can be understood as a further vehicle 200 that functions independently of the vehicle 100. The second vehicle 200 can be the same or a different type. This allows for a seamless transition of vehicle functions across different vehicles 100, 200.

As further shown in Figure 3, optionally, the one or more processors are further collectively configured to identify 312 at least a second occupant 410 of the vehicle 100, determine 321, in dependence on a user profile associated with the identified second occupant 410, a subset of the set of one or more activatable vehicle functions activatable by the identified second occupant 410, and enable 332 the subset of the set of one or more activatable vehicle functions activatable by the identified second occupant 410 in the vehicle system 20. In other words, the processors may recognize a second person in the vehicle 100 and activate a different subset of functions for them. This ensures that multiple occupants 400, 410 can have personalized vehicle functions.

The occupants 400, 410 may be in the vehicle 100 at the same time or at different times. If only the second occupant 410 is in the vehicle 100, it may be provided that only the subset of the set of one or more activatable vehicle functions is enabled that is activatable by the identified second occupant 410. If the first occupant 400 is present as well, it may be provided that the subset of the set of one or more activatable vehicle functions is enabled that is activatable either for the first and/or second occupant 400, 410. In other words, it may be provided that the vehicle functions that are available to the occupants 400, 410 may be the union of the subsets of the occupants 400, 410. This provides the advantage that the user experience of the occupants 400, 410 is improved, as more functionality is available to them, and there is no need to switch user profiles to enable a function that is only available for one of them.

Optionally, at least one of the set of one or more activatable vehicle functions controls at least one of: a velocity of the vehicle 100; and a direction of travel of the vehicle 100. To put it another way, the activatable functions may include controlling the speed and steering of the vehicle 100. This provides the advantage of integrating critical, in particular Advanced Driver Assistance Systems ADAS, functions into the control system 10. Since in particular more advanced vehicle functions may undergo further development after the vehicle 100 is deployed, managing, in particular providing these functions with the control system 10 improves the user experience, as the occupants 400, 410 can enable the newest functions, which follow them from vehicle 100 to vehicle 200.

Optionally, it is conceivable that the one or more processors are further collectively configured to, for at least one vehicle function within the subset of the set of one or more activatable vehicle functions activatable by the identified occupant 400, determine 340, in dependence on a vehicle profile associated with the vehicle 100, if said at least one vehicle function is activatable for the vehicle 100; and enable 330 said at least one vehicle function if it is activatable for the vehicle 100. In other words, the processors can check if a specific function is available for the vehicle 100 and enable it if it is. This ensures that only compatible functions are enabled.

For example, vehicle functions such as a parking assistant or an adaptive cruise control system may be present on the first vehicle 100. This information may be stored in the vehicle profile. However, at least one of these functions may not be present in the second vehicle 200. In this case, the corresponding vehicle function is not enabled in the second vehicle 200. It may also be possible to output a message to the occupant 400 in this case, so that they know why the function is not available.

A vehicle profile may be understood as a set of characteristics and/or settings associated with the vehicle 100.

Optionally, the vehicle profile comprises at least one of a vehicle type, a version of a computer program installed on the vehicle 100, a list of activatable vehicle functions, and an interdependency with another vehicle function. To put it another way, the vehicle profile may include details such as the model of the vehicle 100, software version, available functions, and how they interact with each other. A vehicle profile like this ensures that only functions are enabled that are compatible with the specific vehicle 100.

Optionally, the one or more processors are further collectively configured to output a signal indicative of the enabled subset of the set of one or more activatable vehicle functions activatable by the identified occupant 400. In other words, the processors can send a signal showing which functions have been activated for the occupant 400. This provides clear feedback on the status of the vehicle functions. The signal may be shown on a user interface, in particular a display and or a light on a control panel. It is also conceivable that a notification is sent to the occupant 400 that the functions have been enabled.

Optionally, as shown in Figures 1 and 4, the control system 10 further comprises at least one of the vehicle function system 20, 21 and an occupant identification means 30 that is configured to identify the occupant 400, 410 of the vehicle 100, 200. To put it another way, the control system 10 may include the vehicle's function system 20, 21 and a way to recognize the occupant 400. This ensures that the system 10 can identify who is in the vehicle 100, 200 and enable the appropriate functions.

Optionally, the control system 10 may comprise a communication system that is configured to communicate with a vehicle function system 20 and/or a sharable resource. The communication system may in particular be electrically connected to the vehicle function system 20. Furthermore, the communication system may be configured to communicate with the sharable resource wirelessly, in particular through WiFi and/or mobile radio.

An occupant identification means 30 may be understood as a system for recognizing the person inside the vehicle 100.

Furthermore, it is conceivable that the vehicle function system 20 comprises an advanced driver-assistance system. In other words, the vehicle function system 20 may include features that assist the driver. This provides the advantage of enhancing driving safety and convenience.

Optionally, the advanced driver-assistance system is configured to perform at least one of: adaptive cruise control, lane assistance, blind spot detection, automatic emergency braking, and parking assistance. To put it another way, the driver-assistance system may include features such as maintaining speed, helping with lane changes, detecting vehicles in blind spots, automatically braking in emergencies, and assisting with parking. This ensures a comprehensive set of complex features. These complex features are often subject to further development after the vehicle 100 is being deployed, so that a control system 10 according to the invention provides the advantage that new advanced or updated vehicle functions can be provided for the occupant 400.

According to another embodiment of the invention, a vehicle 100 comprising a control system 10 according to the invention is provided.

This gives the vehicle 200 the same advantages as those already described in detail in connection with a control system 10 according to the invention.

According to a further embodiment of the invention, computer readable instructions which, when executed by a computer, are arranged to perform the method 300 according to the invention are provided.

This gives the computer readable instructions the same advantages as those already described in detail in connection with a control system 10, a vehicle 200, and/or method 300 according to the invention.

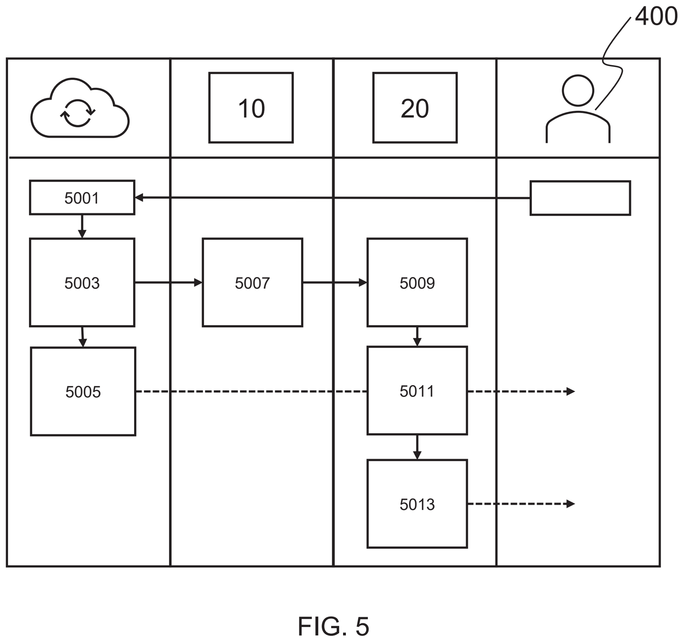

Figure 5 shows an embodiment of the method 300, the control system 10 and the vehicle 100. Here, an occupant 400 requests a vehicle function. This request could be initiated by identifying 310 the occupant 400.

The request is sent to a sharable computing resource (depicted by a cloud symbol in Figure 5). The sharable computing resource checks the request in connection with a vehicle profile. For example, a vehicle line, a vehicle type or a software or hardware version may be stored in the vehicle profile. By checking the request in connection with the vehicle profile, the sharable resource ensures that the requested vehicle function is compatible with the vehicle 100. If this is not the case, the sharable resource notifies the occupant 400 by sending a notification. A notification might also be sent if the check is successful to remind the occupant that a vehicle function is available in vehicles 100 with that profile.

Subsequently, the control system 10 is used to check the user profile of the occupant 400 and determine 320, in dependence on a user profile associated with the identified occupant 400, a subset of the set of one or more activatable vehicle function activatable by the identified occupant 400.

The vehicle system 20 is then instructed to enable 330 the subset of the set of one or more activatable vehicle function activatable by the identified occupant 400. As shown in Figure 5, the vehicle system 20 may be configured to check whether the vehicle function is already enabled and/or activated prior to following the instructions by the control system 10.

Furthermore, the vehicle system 20 may send a notification to the occupant 400, indicating the subset of vehicle functions that has been enabled and/or disabled.

It will be appreciated that various changes and modifications can be made to the present invention without departing from the scope of the present application.

Text in the following table may be substituted for the relevant numerals in the referenced figure:

| | | |
|---|---|---|
| Figure 5 | 5001 | receive |
| Figure 5 | 5003 | Check vehicle profile |
| Figure 5 | 5005 | send notification |
| Figure 5 | 5007 | Determine subset |
| Figure 5 | 5009 | Check status of vehicle function |
| Figure 5 | 5011 | enable/disable vehicle function |
| Figure 5 | 5013 | send notification |
| Figure 5 | 5015 | request |

## Claims

1. A control system for controlling a vehicle system, the vehicle system configured to provide one or more function of a vehicle, the one or more function of the vehicle comprising a set of one or more activatable vehicle function, the control system comprising one or more processors collectively configured to:
- identify an occupant of the vehicle,
- determine, in dependence on a user profile associated with the identified occupant, a subset of the set of one or more activatable vehicle function activatable by the identified occupant, and
- enable the subset of the set of one or more activatable vehicle function activatable by the identified occupant in the vehicle system.

2. The control system according to claim 1, wherein the one or more processors are collectively configured to identify the occupant, determine and enable the subset of features according to claim 1 upon the vehicle being put into a drive mode.

3. The control system according to claim 1 or 2, wherein the one or more processors are further collectively configured to:
- identify the occupant at least in a second vehicle,
- enable the subset of the set of one or more activatable vehicle function activatable by the identified occupant in a vehicle system of the second vehicle .

4. The control system according to any one of the preceding claims, wherein the one or more processors are further collectively configured to:
- identify at least a second occupant of the vehicle,
- determine, in dependence on a user profile associated with the identified second occupant, a subset of the set of one or more activatable vehicle function activatable by the identified second occupant, and
- enable the subset of the set of one or more activatable vehicle function activatable by the identified second occupant in the vehicle system.

5. The control system according to any one of the preceding claims, wherein at least one of the set of one or more activatable vehicle function controls at least one of: a velocity of the vehicle; and a direction of travel of the vehicle.

6. The control system according to any one of the preceding claims, wherein the one or more processors are further collectively configured to, for at least one vehicle function within the subset of the set of one or more activatable vehicle function activatable by the identified occupant:
- determine, in dependence on a vehicle profile associated with the vehicle, if said at least one vehicle function is activatable for the vehicle; and
- enable said at least one vehicle function if it is activatable for the vehicle.

7. The control system according to claim 6, wherein the vehicle profile comprises at least one of a vehicle type, a version of a computer program installed on the vehicle, a list of activatable vehicle functions, and an interdependency with another vehicle function.

8. The control system according to any one of the preceding claims, wherein the one or more processors are further collectively configured to:
- output a signal indicative of the enabled subset of the set of one or more activatable vehicle function activatable by the identified occupant.

9. The control system according to any one of the preceding claims, further comprising at least one of
- the vehicle function system, and
- an occupant identification means that is configured to identify the occupant of the vehicle.

10. The control system according to any one of the preceding claims, wherein the vehicle function system comprises an advanced driver-assistance system.

11. The control system according to claim 10, wherein the advanced driver-assistance system is configured to perform at least one of: adaptive cruise control, lane assistance, blind spot detection, automatic emergency braking and parking assistance.

12. A vehicle comprising a control system of any one of claims 1 - 11.

13. A method for controlling a control system, in particular according to one of claims 1 to 11, for controlling a vehicle system configured to provide one or more function of a vehicle, the one or more function of the vehicle comprising a set of one or more activatable vehicle function, comprising:
- identify an occupant of the vehicle,
- determine, in dependence on a user profile associated with the identified occupant, a subset of the set of one or more activatable vehicle function activatable by the identified occupant, and
- enable the subset of the set of one or more activatable vehicle function activatable by the identified occupant in the vehicle system.

14. Computer readable instructions which, when executed by a computer, are arranged to perform the method according to claim 13.
